# FASCICULE DE BREVET EUROPEEN

(11) **EP 1 880 595 B1**
(45) Date de publication et mention de la délivrance du brevet: **15.02.2012**
(21) Numéro de dépôt: 07108954.4
(22) Date de dépôt: 25.05.2007
(51) Int. Cl.: A01G 9/14, A01G 9/24

(54) **Serre pour la culture de vegetaux sous plastique**
Gewächshaus zum Anbau von Pflanzen unter Plastikfolie
Greenhouse for growing vegetables under plastic

(30) Priorité: 17.07.2006 FR 0606478
(43) Date de publication de la demande: 23.01.2008
(73) Titulaire: Filclair S.A., 13770 Venelles (FR)
(72) Inventeur: Thery, Arnauld, 13510, EYGUILLES (FR)
(74) Mandataire: Domange, Maxime

(56) Documents cités:
- EP-A1- 0 282 469
- FR-A1- 2 289 111
- FR-A1- 2 722 645
- FR-A1- 2 856 886

## Description

La présente invention concerne une serre pour la culture de végétaux sous plastique. Plus particulièrement, la présente invention concerne une serre dont la géométrie et la structure permettent d'améliorer de façon significative les conditions climatiques à l'intérieur de la serre, aussi bien en termes d'aération, que de température ou d'hygrométrie.

Les cultures de végétaux sous serres sont pratiquées depuis très longtemps, notamment pour pouvoir cultiver desdits végétaux, tels que fleurs, fruits et légumes tout au long de l'année, indépendamment des saisons et des cycles de culture et de croissance naturels de ces végétaux. En outre, les cultures sous serres permettent d'accélérer les cycles de croissance des végétaux cultivés, et d'augmenter les rendements de culture en créant à l'intérieur des serres un climat propice au développement et la maturation des cultures quelles que soient les conditions climatiques à l'extérieur des serres.

Traditionnellement, les serres de culture sous plastique sont de deux types principaux. En premier lieu, on connaît les serres de type "serre-tunnel", dont la structure est essentiellement constituée de profilés en forme d'arceaux sensiblement semi-circulaires qui s'étendent depuis le faîtage jusqu'au sol et qui supportent une toile de couverture formée d'un film de matériau plastique transparent tendu sur les arceaux.

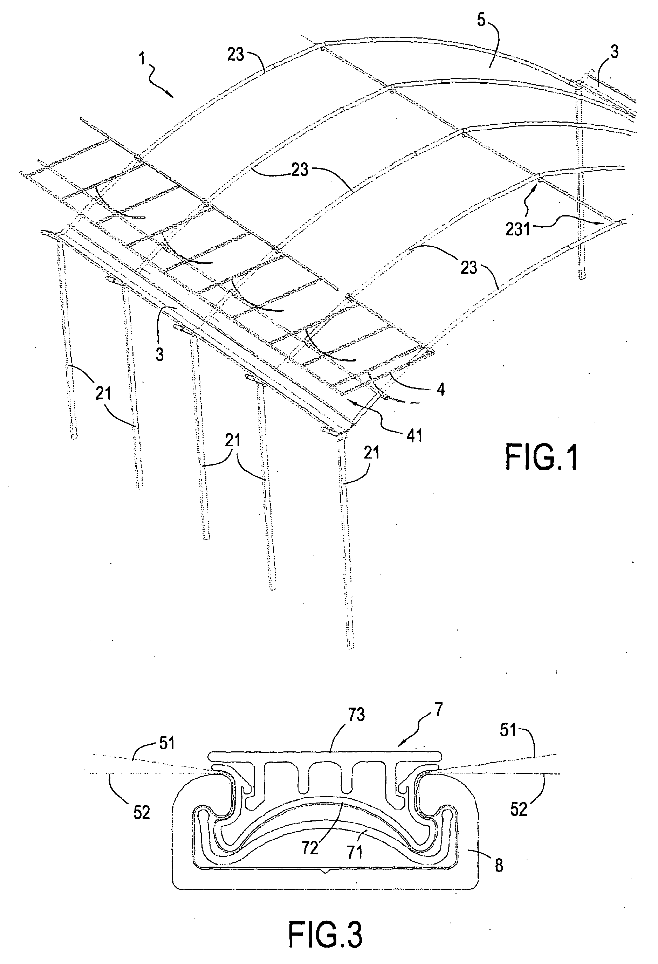

On connait également en second lieu les serres dites de type "chapelle". Un exemple d'une telle serre est représenté à la figure 1. Ces dernières comportent une pluralité de fermes parallèles constituées chacune d'un cintre supérieur constitué par un ou plusieurs profilés métalliques formant un arc, brisé ou non, et reposant sur les extrémités supérieures de deux montants latéraux verticaux, eux-mêmes reliés entre eux par une traverse de rigidification de l'ensemble.

Les fermes sont reliées entre elles par au moins une entretoise disposée sous leur cintre et par des chéneaux latéraux reliant les montants latéraux des fermes consécutives, lesdites fermes étant recouvertes d'un film de matériau plastique transparent tendu sur les cintres entres les chéneaux pour former une nef.

Lorsque la serre ne comporte qu'une seule nef, on parle alors de serre "mono-chapelle" (figure 1) et de serre "multi-chapelles" lorsque la serre comporte plusieurs nefs disposées parallèlement les unes aux autres dans leur sens longitudinal. Des serres de ce type ont été décrites notamment dans le brevet FR-A-2 289 111.

La présente invention concerne plus particulièrement les serres de type "chapelle" et propose une structure améliorant la climatologie dans les serres "chapelle".

Une des conditions climatiques essentielles à procurer et à entretenir dans ces serres est l'aération. En effet, la ventilation de la serre permet de renouveler l'air à l'intérieur de celle-ci et d'éviter la condensation. Une aération suffisante et maîtrisée à l'intérieur de la serre peut ainsi permettre d'influencer de manière positive deux des autres conditions climatiques principales pour les cultures, à savoir l'hygrométrie et la température.

Pour gérer et améliorer l'aération dans les serres, différentes techniques ont été employées jusqu'à ce jour. Outre l'aération forcée par des ventilateurs, la principale technique de ventilation des serres "chapelle" consiste à procurer un ouvrant mobile dans la couverture de la serre. Cet ouvrant consiste en un battant de couverture articulé sur les cintres des fermes d'une nef.

Cet ouvrant peut être dit "de faîtage", auquel cas il est articulé au niveau de l'entretoise de faîtage des nefs de la serre. Cette solution représente actuellement quelques 80% du marché des serres de type "chapelle" dans le monde.

Il peut également être dit "sur chéneau", comme représenté à la figure 1, auquel cas il est articulé le long d'une ligne d'articulation parallèle aux chéneaux située à une distance intermédiaire entre celui-ci et le faîtage de la serre et dont le bord "de fuite", opposé à cette ligne d'articulation, repose sur un chéneau lorsque ledit ouvrant est en position fermée.

Ces ouvrants, qu'ils soient de faîtage ou sur chéneaux, ne permettent malheureusement pas une aération des serres suffisante dans certaines conditions d'utilisation, qui sont pourtant de plus en plus fréquentes. En particulier, la lutte contre les insectes nuisibles, notamment la mouche blanche *Bemisia tabaci* qui transmet aux végétaux de nombreux virus, nécessite la protection physique des cultures serricoles par le biais de filets anti-insectes, qui sont tendus aux niveaux des ouvrants de serres.

S'ils préviennent certes l'intrusion d'insectes, ces filets ont en revanche un impact particulièrement néfaste sur l'aération des serres. En effet, les filets anti-insectes réduisent de façon importante le débit de renouvellement de l'air dans les serres, ce qui provoque une augmentation importante de l'humidité de l'air et la température à l'intérieur des serres, avec les conséquences négatives que cela entraîne sur les cultures.

Il s'avère donc nécessaire d'améliorer les performances de ventilation des serres de type "chapelle" afin de compenser l'impact négatif des filets anti-insectes. La présente invention vise donc à procurer une solution à ce problème technique.

Un but de l'invention est notamment d'améliorer de façon importante la puissance d'aération intrinsèque des serres de type "chapelle".

Un autre but de l'invention est également de proposer une serre de type "chapelle" dont la structure et le montage sont simplifiés pour faciliter et sécuriser les opérations de montage des serres.

En effet, les normes en vigueur, en particulier en Europe, exigent de plus en plus de sécurité et interdisent aux opérateurs de montage de grimper sur les fermes des serres et les chéneaux, ce qui est actuellement nécessaire pour mettre en place et tendre les couvertures de plastique sur les cintres des fermes.

Un autre but de l'invention est également de fournir une serre de type "chapelle" dont la structure soit la plus transparente possible à la lumière afin d'améliorer la pénétration de lumière dans la serre, en particulier dans le cas de serres multi-chapelles.

Pour atteindre ces buts, la présente invention propose une serre de type "chapelle", comportant au moins une nef constituée d'une pluralité de fermes implantées parallèlement les unes aux autres selon un pas régulier sur toute la longueur de ladite nef, lesdites fermes étant constituées de deux montants verticaux reliés par une traverse entre leurs extrémités supérieures et supportant au niveau de ces extrémités supérieures un cintre. Les fermes de la serre sont, de façon connue, reliées les unes aux autres pour former la nef par des chéneaux longitudinaux fixés entre lesdites extrémités supérieures des montants des fermes, lesdits cintres comportant un ouvrant sur chéneau et étant recouverts d'une paroi de couverture transparente formée d'un film de matière plastique tendu sur lesdits cintres.

La serre de la présente invention se caractérise par le fait que, d'une part le rapport dimensionnel de la flèche (F) des cintres à la largeur (L) des fermes est inférieur ou égal à 0,15, et également par le fait que, d'autre part, l'extrémité (ou bord de fuite) de l'ouvrant desdits cintres dépasse, en position d'ouverture, le faîte des cintres de chaque ferme.

La serre selon l'invention présente ainsi de façon avantageuse une voûte supérieure présentant, en comparaison des serres "chapelle" traditionnelles, un plus grand rayon moyen de courbure. En effet, les cintres des fermes de la serre selon l'invention ont une flèche, c'est à dire la distance verticale séparant la traverse de liaison des montants du faîte de chaque ferme, beaucoup plus courte que les serres "chapelle" classiques.

A titre d'exemple, pour une nef de 9,60 mètres de largeur (largeur de nef standard), la flèche des cintres des fermes de la serre selon l'invention est d'au plus 1,40 mètres, alors que la flèche des cintres des serres traditionnelles est comprise, pour des largeurs de nefs identiques, entre 1,65 mètres et 2,50 mètres selon les constructeurs.

La serre selon l'invention, grâce à sa structure particulière définie ci-dessus, a une puissance d'aération bien supérieure aux serres traditionnelles. Les inventeurs ont en effet constaté, suite à des travaux de modélisation numérique de l'écoulement des flux d'air dans les serres selon une climat de référence souhaité à l'intérieur de la serre, qu'une structure de serre dont la voûte a un plus grand rayon moyen de courbure permet d'obtenir une circulation d'air plus importante et plus homogène dans la serre, le débit d'air entrant au niveau de l'ouvrant étant également beaucoup plus important.

Il a également été constaté que, de façon surprenante, une condition essentielle supplémentaire de cette amélioration de la circulation d'air dans la serre était la présence d'un ouvrant sur chéneau dépassant le faîte des cintres des fermes de la serre en position ouverte.

En examinant, à l'aide de logiciels de calcul de mécanique des fluides, les écoulements se produisant sur et dans la serre selon l'invention, les inventeurs ont pu constater que la forme de la serre de l'invention permet, comme pour une aile d'avion, un meilleur écoulement des flux d'air sur la voûte à l'extérieur de la serre, mais également à l'intérieur de la serre, en particulier lorsque celle-ci comporte plusieurs nefs parallèles.

En outre, la présence d'un ouvrant sur chéneau qui dépasse en position ouverte du faîtage des nefs provoque, au niveau de l'ouvrant, une dépression et donc une aspiration d'air vers l'intérieur de la serre, cette dépression étant générée par une surpression d'air au niveau de la cassure entre la courbure de la voûte de la serre et le battant de l'ouvrant en position ouverte.

Par la combinaison d'une voûte caractérisée par un rapport de flèche à largeur tel que défini précédemment et d'un ouvrant dépassant de cette voûte en position ouverte, la serre selon l'invention présente une puissance d'aération et des propriétés de circulation naturelle de l'air à l'intérieur de la serre bien supérieures aux serres traditionnelles, ce qui permet une amélioration surprenante du climat interne à la serre pour un climat externe donné, avec jusqu'à 4°C et jusqu'à 20% d'hygrométrie en moins par rapport aux serres classiques.

Selon une caractéristique préférée de la serre de l'invention, les cintres des fermes présentent une courbure continue dépourvue de brisure au faîte, ladite courbure étant, de préférence, continue sur au moins 80% de la longueur du cintre. Cette continuité de courbure, sans brisure au faîte permet d'éviter les perturbations d'écoulement des filets d'air sur la voûte des nefs de la serre.

Selon une autre caractéristique avantageuse, le rayon de courbure des cintres de la serre selon la présente invention est sensiblement constant.

Conformément à une autre caractéristique préférée de la serre de l'invention, le rapport dimensionnel de la flèche d'un cintre à la corde entre un montant et le faîte d'une dite ferme, est inférieur à 0,08. Le respect de cette caractéristique structurelle de la serre, quantifiant quelle que soit la largeur des nefs, la courbure et la flèche des cintres, permet d'obtenir la meilleure circulation d'air sur et à l'intérieur de la serre.

Afin de garantir une aspiration d'air satisfaisante par les ouvrants, lesdits ouvrants dépassent de préférence, en position d'ouverture extrême, d'une distance (d) d'au moins 40 cm par rapport au faîte de chacune des fermes de la serre.

Da façon avantageuse, ladite paroi de couverture de la serre de l'invention peut être une double paroi gonflable comportant au moins deux films transparents superposés et fixés sur les chéneaux, ce qui permet de diminuer le coefficient de déperdition thermique de ladite paroi de couverture.

Dans ce cas, conformément à une autre caractéristique préférée de l'invention, la serre comporte des moyens de tensionnement variable des deux films formant la double paroi gonflable. Ceci permet avantageusement de tendre différemment les deux films formant la paroi gonflable, et notamment de tendre plus fortement la paroi du dessous pour éviter les effets "ballon" survenant traditionnellement avec les couvertures à double paroi gonflable, effets "ballon" qui provoquent des écoulements de condensation sur les cultures.

Dans une variante de réalisation préférée de la serre de l'invention, lesdits moyens de tensionnement variable comportent des clips "gigognes" permettant de bloquer indépendamment les deux films de la double paroi gonflable sur le chéneau. Ces clips "gigognes" sont en fait des clips conformés pour pouvoir se clipper les uns dans les autres, ce qui permet de bloquer, sur un même chéneau une pluralité de films, et par conséquent de tendre différemment deux films d'une double paroi gonflable de serre.

Dans une autre variante de réalisation préférée de l'invention, lesdits chéneaux reliant lesdites fermes sont constitués par une panne métallique profilée comportant, sur au moins une de ses faces, des moyens de blocage d'un dit film transparent de ladite paroi de couverture. Ces chéneaux peuvent notamment être constitués d'un profilé tubulaire d'aluminium extrudé, qui présente une très faible largeur et donc une très faible surface d'opposition à la lumière.

De plus, des chéneaux ainsi constitués de pannes métallique peuvent comporter sur une, deux ou plus de leurs faces des moyens de blocage permettant, par exemple à l'aide de clips "gigognes" évoqués précédemment de mettre en place la paroi de couverture des nefs de la serre depuis l'intérieur de la serre, par exemple depuis une nacelle d'un véhicule élévateur léger, ce qui évite aux monteurs de serres de grimper sur les chéneaux comme c'est la cas avec les serres traditionnelles. On améliore ainsi la sécurité et la simplicité de montage de la serre.

D'autres caractéristiques et avantages de la présente invention ressortiront mieux à la lecture de la description qui va suivre, faite de manière illustrative et non limitative, en référence aux dessins annexés sur lesquels :
- la figure 1 une nef de serre de type "chapelle" comportant un ouvrant sur chéneau telle que connue de l'état de la technique;
- la figure 2 représente une ferme de serre selon la présente invention, avec un ouvrant sur chéneau en position ouverte;
- la figure 3 représente un clip gigogne pour la fixation d'une paroi de couverture de serre coopérant avec un moyen de blocage sur chéneau;
- les figures 4 et 5 représentent une panne métallique pour la réalisation de chéneau de serre conformément à la présente invention, ces pannes comportant une pluralité de gorges de blocage, une de ces gorges recevant un clip gigogne conformément à l'invention pour fixer un film de couverture de serre;
- la figure 6 représente, en agrandissement le principe de montage d'un chéneau souple sur les montants des fermes d'une serre de type "chapelle" selon la présente invention.

La figure 1 représente une nef 1 de serre de type "chapelle" telle que connue de l'état de la technique. Cette nef 1 est composée de fermes 2 implantées parallèlement dans le sol selon un pas régulier P. Les fermes 2 sont composées de montants droits 21, supportant au niveau de leur extrémités supérieures un cintre 23 en forme d'arc brisé au faîte 231 des fermes 2.

Dans le sens longitudinal de la nef 1, les fermes 2 sont reliées entre elles par des chéneaux 3, servant à la récupération et l'évacuation des eaux de pluie. De plus, un ouvrant d'aération 4 est monté sur les cintres 23 des fermes 2 dans le sens longitudinal de la nef. Cet ouvrant 4, comme représenté à la figure 1 est un ouvrant sur chéneau. La nef 1 est recouverte d'une paroi de couverture 5 constituée d'un film de matière plastique transparent, par exemple de polyéthylène. Cette paroi est tendue sur les cintres 23 et l'ouvrant 4 et est bloquée, de façon conventionnelle, par des clips (non représentés) sur les chéneaux 3.

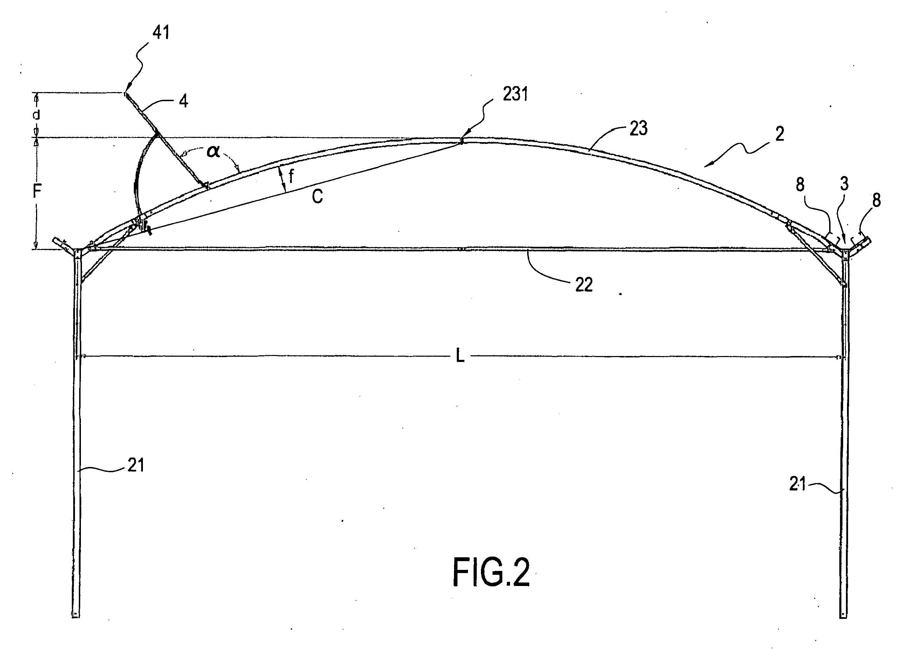

La serre selon la présente invention s'apparente à la serre de la figure 1. Toutefois, elle présente des rapports dimensionnels et une structure tout à fait propres et avantageux comme développé ci-après en référence aux figures 2 à 6.

La serre selon l'invention comporte au moins une nef 1 constituée d'une pluralité de fermes 2 elles mêmes constituées, comme représenté à la figure 2, de deux montants 21 verticaux reliés entre leurs extrémités supérieures par une traverse 22 et supportant au niveau de ces extrémités supérieures un cintre 23.

Lesdites fermes 2 sont reliées les unes aux autres par des chéneaux 3 longitudinaux fixés entre lesdites extrémités supérieures des montants 21 des fermes. Les cintres 23 supportent un ouvrant 4 sur chéneau et sont recouverts d'une paroi de couverture 5 transparente formée d'un film de polyéthylène tendu sur lesdits cintres.

Conformément à l'invention, la flèche F des cintres 23 et la largeur L des fermes 2 sont telles que leur rapport F/L est inférieur ou égal à 0,15. Cette caractéristique dimensionnelle de la serre selon l'invention a été déterminée par les inventeurs comme une condition sine qua none pour obtenir une puissance de ventilation de la serre suffisante, notamment lorsque des filets de protection anti-insectes sont mis en place au niveau des ouvrants 4.

Une autre condition essentielle pour que la serre de l'invention présente une puissance d'aération suffisante et améliorée par rapport aux serres "chapelle" classique est que l'extrémité 41 de l'ouvrant 4 sur lesdits cintres 23 dépasse, en position d'ouverture, le faîte 231 des fermes 2. Les meilleurs résultats en termes d'aération on été obtenus, après tests, avec des ouvrants dont l'extrémité 41 dépasse d'au moins 40 cm au dessus du faîte 231 des cintres 23 des fermes 2 de la serre.

Cette caractéristique permet en particulier de provoquer, au niveau de l'angle α formé entre l'ouvrant 4 en position d'ouverture et les cintres 23 des fermes (ainsi que la couverture 5), une surpression d'air, cette surpression entraînant, au niveau de l'ouvrant, une dépression et une aspiration d'air vers l'intérieur de la serre. On obtient ainsi une ventilation plus puissante permettant de compenser les effets négatifs des filets de protection contre les insectes disposés les cas échéant aux ouvrants.

La serre de la présente invention présente un profil de voûte, ou profil de couverture sensiblement aplati par comparaison avec les serres "chapelles" traditionnelle. Ce profil aplati se caractérise en particulier, quelque soit la largeur L des fermes 2 de la serre, par un rapport dimensionnel de la flèche F des fermes 2 à la corde C de ces mêmes fermes qui est inférieur ou égal à 0, 08, la corde C des fermes 2 étant définies comme le segment de droite joignant le faîte 231 de chaque cintre 23 à l'extrémité supérieure des montants 21 des fermes.

Un tel rapport de flèche à corde des fermes 2 confère à la serre de la présente invention un profil de voûte beaucoup plus plat, dont le rayon de courbure est plus grand que celui des serres classiques, ce qui, à l'image d'un profil de grand voile sur un bateau, ou d'aile d'avion, permet un meilleur écoulement des filets d'air sur la couverture de la serre, mais également un meilleur écoulement de l'air à l'intérieur de la serre. On obtient ainsi une meilleur homogénéisation de l'air circulant dans la serre, avec une diminution des points d'air chaud et humide et une meilleure ventilation des nefs, ce qui permet d'abaisser, à climat extérieur équivalent, la température à l'intérieur de la serre de 4 °C et le degré d'hygrométrie de 20%, par comparaison à une serre "chapelle" traditionnelle.

Les cintres 23, pour favoriser encore l'écoulement des filets d'air sur et sous la couverture 5 de la serre présentent une courbure continue dépourvue de brisure au faîte 231, ladite courbure étant, de préférence, continue sur au moins 80% de la longueur des cintres. En effet, il a été constaté que les brisures au faîte ou les discontinuités de courbures des cintres provoquaient des brisure et discontinuités connexes des parois de couvertures, avec des perturbations d'écoulement de l'air au niveau de ces brisures et discontinuités. C'est pourquoi de préférence, le rayon de courbure des cintres 23 des fermes 2 de la serre de l'invention est sensiblement constant sur toute la longueur desdits cintres.

La paroi de couverture 5 de la serre peut être simple, c'est à dire constituée d'un seul film de polyéthylène fixé sur les chéneaux 3 et tendu sur les cintres 23 et les ouvrants 4, ou être une double paroi gonflable constituée de deux films de polyéthylène 51, 52 également fixés sur les chéneaux 3 et tendus sur les cintres 23 et entre lesquels, selon des techniques connues, on injecte de l'air pour gonfler la couverture. Une couverture en double paroi gonflable permet, de façon connue, de diminuer le facteur K de déperdition thermique de la couverture des serres jusqu'à 50% par rapport aux serres en couverture simple film.

Toutefois, un inconvénient habituellement rencontré avec les doubles parois gonflables est l'effet dit de "ballon" à proximité des fixations des films aux chéneaux 3, qui sont réalisées par des clips insérés dans des gorges 8 formées sur les chéneaux 3. Ces "ballons" sont dus au fait que la fixation des deux films 51, 52 formant la double paroi gonflable est telle que la tension des deux films est identique. Avec les variations de températures, généralement plus chaudes à l'intérieur qu'à l'extérieur de la serre, le film 52 du dessous tend à se dilater plus fortement que celui du dessus 51, ce qui provoque la formation de ballons d'air, au niveau desquels les eaux de condensation s'accumulent et gouttent sur les cultures ce qui est un inconvénient.

Pour compenser ces effets de ballons avec les couvertures en doubles parois gonflables, la serre selon l'invention prévoit l'emploi de clips gigognes 7 représentés à la figure 3. Ces clips sont composés d'au moins 3 éléments 71, 72, 73 constituant respectivement un premier clip 71 destiné à être inséré dans le fond des gorges 8 de blocage sur chéneaux pour bloquer un premier film 52, un sur-clip 72 pour bloquer un deuxième film 51 par pincement entre le clip 71, les bordures de gorges 8 et ledit sur-clip 72 et une plaquette d'étanchéité 73, venant elle-même s'encliqueter sur le sur-clip 72 grâce à des pattes conformées à cet effet et coopérant avec des butées formées sur les bordures du sur-clip 72.

Ces clips gigognes 7 permettent avantageusement de pouvoir exercer sur les films 51, 52 d'une double paroi gonflable des tensions différentes, en particulier de tendre le film du dessous 52 plus fortement que le film du dessus 51, et de fixer ces films fermement indépendamment l'un de l'autre grâce au clip 71 et au sur-clip 72 comme représenté à la figure 3.

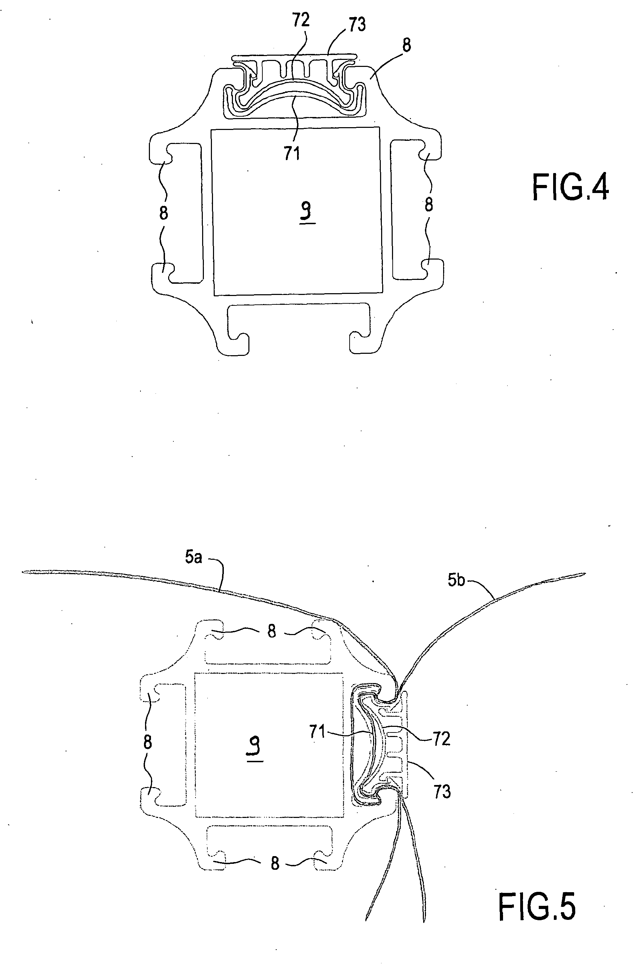

Dans une variante de réalisation préférée de la serre de l'invention, les chéneaux 3 reliant lesdites fermes 2, sont constitués par une panne métallique profilée 9 telle que représentée aux figures 4 et 5 comportant, sur au moins une de ses faces, un moyen de blocage, notamment une gorge 8.

Les pannes métalliques 9 formant les chéneaux sont constituées d'un profilé tubulaire d'aluminium extrudé de faible section, qui présente une très faible largeur, et qui ont l'avantage d'alléger la structure des serres. D'autre part, ces chéneaux présentent une très faible surface d'opposition à la lumière ce qui améliore la transparence à la lumière de la serre en diminuant les zones d'ombrage pendant les périodes diurnes, et donc améliore les conditions et le climat de culture à l'intérieur de la serre.

En outre, il est possible grâce aux chéneaux formés par des pannes profilées 9, de réaliser une étanchéité parfaite entre les films de couverture 5a, 5b de deux nefs contigües de serre, en bloquant ces films à l'aide d'un clip gigogne 7 dans une seule des gorges de blocage 8 du chéneau 3, le contact entre les films 5 étant alors parfait et entièrement étanche (voir figure 5).

Ces pannes 9 peuvent également, comme représenté sur les figures 4 et 5, comporter sur une, deux ou plus de leurs faces des gorges 8 de blocage permettant, par exemple à l'aide de clips gigognes 7 évoqués précédemment de mettre en place la paroi de couverture 5 de la serre depuis l'intérieur de celle-ci, par exemple depuis une nacelle d'un véhicule élévateur léger, ce qui évite aux monteurs de serres de grimper sur les chéneaux comme c'est la cas avec les serres traditionnelles. On améliore ainsi la sécurité et la simplicité de montage de la serre.

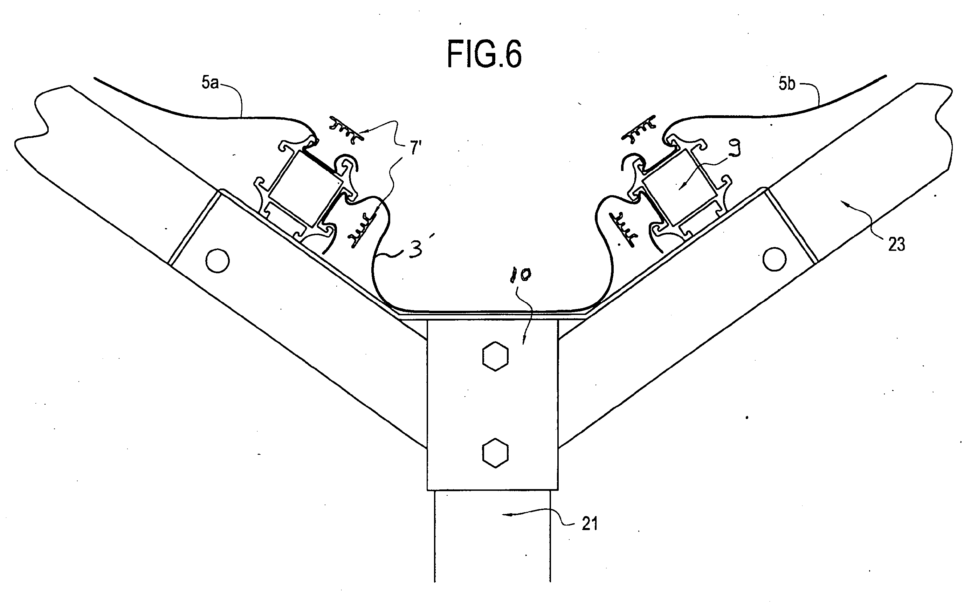

Dans une autre variante de réalisation représentée à la figure 6, les chéneaux classiques, en acier, de la serre peuvent être remplacés par un chéneau souple 3' fixé sur deux pannes 9 profilées identiques à celles décrites précédemment et fixées solidement de façon symétrique sur une tête 10 à l'extrémité supérieure des montants 21 des fermes 2 de la serre.

Dans ce mode de réalisation, les pannes profilées 9 comportent au moins deux gorges de blocage 8 qui permettent à la fois la fixation des films de couverture 5a, 5b de deux nefs contigües de la serre et la fixation d'un chéneau souple 3', en matière plastique, à l'aide de clips de blocage 7' ou de clips gigognes tels que décrits précédemment aux figures 3 à 5.

Ce mode de réalisation est particulièrement avantageux pour l'installation de serres dans les zones très chaudes. En effet, dans ces zones, les chéneaux classiques en métal chauffent de façon très importante sous les rayons du soleil, jusqu'à des températures supérieures à 100°C parfois, ce qui provoque une radiation de chaleur importante dans les serres et une augmentation de température. Avec un chéneau souple 3' en matière plastique, l'échauffement du chéneau est beaucoup plus faible et les radiations de chaleur quasi- inexistantes vers l'intérieur de la serre.

De plus, la réalisation d'un chéneau souple 3' monté sur deux pannes profilées 9 confère une meilleure étanchéité que les chéneaux classiques en métal.

Enfin, un autre avantage à l'utilisation de chéneaux souples 3' et de pannes profilées 9 pour les fixer est qu'il devient possible de simplifier et sécuriser le montage des serres puisqu'il est possible de mettre en place les chéneaux souples 3' depuis l'intérieur de la serre par exemple depuis une nacelle d'un véhicule élévateur léger, ce qui évite de grimper sur les chéneaux comme c'est la cas avec les serres traditionnelles.

La serre selon l'invention telle qu'elle vient d'être décrite, permet donc, par ses multiples caractéristiques structurelles nouvelles, d'améliorer de façon sensible les conditions climatiques de culture de végétaux sous plastique dans des serres de type "chapelle". La serre de l'invention permet en particulier une meilleure ventilation, une meilleure hygrométrie et une meilleure luminosité par comparaison avec les serres existantes. En outre et enfin, la serre de l'invention est également plus simple et plus rapide à édifier que les serres "chapelle" traditionnelles, tout en améliorant et en sécurisant les conditions de montage des serres pour les opérateurs.

## Revendications

1. Serre de type chapelle, comportant au moins une nef (1) constituée d'une pluralité de fermes (2) implantées parallèlement les unes aux autres selon un pas régulier sur toute la longueur de ladite nef, lesdites fermes (2) étant constituées de deux montants (21) verticaux reliés entre leurs extrémités supérieures par une traverse (22) et supportant au niveau de ces extrémités supérieures un cintre (23), lesdites fermes (2) étant reliées les unes aux autres par des chéneaux (3) longitudinaux fixés entre lesdites extrémités supérieures des montants (21) des fermes, lesdits cintres (23) supportant un ouvrant (4) sur chéneau et étant recouverts d'une paroi de couverture (5) transparente formée d'un film dé matière plastique tendu sur lesdits cintres, **caractérisée en ce que** le rapport dimensionnel de la flèche (F) des cintres (23) à la largeur (L) desdites fermes (2) est inférieur ou égal à 0,15, l'extrémité (41) de l'ouvrant (4) sur lesdits cintres (23) dépassant, en position d'ouverture, le faîte (231) desdites fermes (2).

2. Serre selon la revendication 1, **caractérisée en ce que** lesdits cintres (23) présentent une courbure continue dépourvue de brisure au faîte (231), ladite courbure étant, de préférence, continue sur au moins 80% de la longueur des cintres.

3. Serre selon la revendication 1 ou 2, **caractérisée en ce que** le rapport dimensionnel de la flèche (F) d'un cintre à la corde (C) entre un montant (21) et le faîte (231) d'une dite ferme (2), est inférieur à 0, 08.

4. Serre l'une des revendications 1 à 3, **caractérisée en ce que** ledit ouvrant (4) de chacune desdites fermes (2) dépasse, en position d'ouverture extrême, d'une distance (d) d'au moins 40 cm par rapport au faîte (231) desdites fermes (2).

5. Serre selon l'une des revendications précédentes, **caractérisée en ce que** le rayon de courbure des cintres (23) des fermes est sensiblement constant.

6. Serre selon l'une des revendications précédentes, **caractérisée en ce que** ladite paroi de couverture (5) est une double paroi gonflable comportant au moins deux films transparents superposés et fixés sur les chéneaux (3).

7. Serre selon la revendication 6, **caractérisée en ce qu'**elle comporte des moyens de tensionnement variable (7) des deux films (51, 52) formant la double paroi gonflable.

8. Serre selon la revendication 7, **caractérisée en ce que** lesdits moyens de tensionnement variable comportent des clips gigognes (7) permettant de bloquer indépendamment les deux films (51, 52) de la double paroi gonflable sur le chéneau (3).

9. Serre selon l'une des revendications précédentes, **caractérisée en ce que** lesdits chéneaux (3) reliant lesdites fermes (2), sont constitués par une panne métallique profilée (9) comportant, sur au moins une de ses faces, un moyen de blocage (8) d'un dit film transparent de ladite paroi de couverture (5).

10. Serre selon l'une des revendications précédentes, **caractérisée en ce qu'**elle comporte des chéneaux souples (3') fixés sur deux pannes (9) profilées fixées solidement de façon symétrique par rapports aux dits montants (21) des fermes (2) au niveau de l'extrémité supérieure desdits montants (21), lesdites pannes comportant des moyens (8) de blocage desdits chéneaux souples (3') aptes à coopérer avec des moyens de blocage complémentaire (7, 7').

## Claims

1. A greenhouse of the "chapel" type, including at least one nave (1) consisting of a plurality of trusses (2) set up parallel to each other according to a regular pitch over the whole length of said nave, said trusses (2) consisting of two vertical uprights (21) connected between their upper ends by a crossbar (22) and supporting at these upper ends an arch (23), said trusses (2) being connected to each other by longitudinal gutters (3) attached between said upper ends of the uprights (21) of the trusses, said arches (23) supporting a casement (4) on a gutter and being covered with a transparent cover wall (5) formed with a film of plastic material tensioned on said arches, **characterized in that** the dimensional ratio of the deflection (F) of the arches (23) to the width (L) of said trusses (2) is less than or equal to 0.15, the end (41) of the casement (4) on said arches (23) jutting out in the opening position from the crest (231) of said trusses (2).

2. The greenhouse according to claim 1, **characterized in that** said arches (23) have a continuous curvature without any break at the crest (231), said curvature being preferably continuous over at least 80% of the length of the arches.

3. The greenhouse according to claim 1 or 2, **characterized in that** the dimensional ratio of the deflection (F) of an arch to the chord (C) between an upright (21) and the crest (231) of one said truss (2), is less than 0.08.

4. The greenhouse according to one of claims 1 to 3, **characterized in that** said casement (4) of each of said trusses (2) juts out in the extreme opening position by a distance (d) of at least 40 cm relatively to the crest (231) of said trusses (2).

5. The greenhouse according to one of the preceding claims, **characterized in that** the radius of curvature of the arches (23) of the trusses is substantially constant.

6. The greenhouse according to one of the preceding claims, **characterized in that** said cover wall (5) is an inflatable double-wall including at least two transparent films superposed and attached on the gutters (3).

7. The greenhouse according to claim 6, **characterized in that** it includes means (7) for variably tensioning both films (51, 52) forming the inflatable double-wall.

8. The greenhouse according to claim 7, **characterized in that** said variable tensioning means include nesting clips (7) with which both films (51, 52) of the inflatable double-wall may be independently blocked on the gutter (3).

9. The greenhouse according to one of the preceding claims, **characterized in that** said gutters (3) connecting said trusses (2) are formed by a profiled metal purlin (9) including on at least one of its faces, a means (8) for blocking one said transparent film of said cover wall (5).

10. The greenhouse according to one of the preceding claims, **characterized in that** it includes flexible gutters (3') attached on two firmly attached profiled purlins (9) symmetrically with respect to said uprights (21) of the trusses (2) at the upper end of said uprights (21), said purlins including means (8) for blocking said flexible gutters (3') capable of cooperating with the complementary blocking means (7, 7').

## Patentansprüche

1. Schiffartiges Gewächshaus, umfassend wenigstens ein Schiff (1), das aus einer Vielzahl von Bindern (2) besteht, die in einem gleichmäßigen Abstand über die gesamte Länge des Schiffs parallel zueinander angeordnet sind, wobei die Binder (2) von zwei Vertikalstützen (21) gebildet sind, die zwischen ihren oberen Enden durch eine Traverse (22) verbunden sind und die im Bereich dieser oberen Enden einen Bogen (23) tragen, wobei die Binder (2) durch Längsdachrinnen (3), die zwischen den oberen Enden der Stützen (21) der Binder befestigt sind, miteinander verbunden sind, wobei die Bögen (23) einen Flügel (4) über der Dachrinne tragen und mit einer transparenten Abdeckwand (5), welche von einer über die Bögen gespannten dünnen Kunststoffolie gebildet ist, abgedeckt sind, **dadurch gekennzeichnet, daß** das Abmessungsverhältnis der Pfeilhöhe (F) der Bögen (23) zur Breite (L) der Binder (2) kleiner als oder gleich 0,15 ist, wobei das Ende (41) des Flügels (4) an den Bögen (23) in der Öffnungsstellung über den First (231) der Binder (2) hinausragt.

2. Gewächshaus nach Anspruch 1, **dadurch gekennzeichnet, daß** die Bögen (23) eine kontinuierliche Krümmung ohne Knick am First (231) aufweisen, wobei die Krümmung vorzugsweise über wenigstens 80 % der Länge der Bögen kontinuierlich ist.

3. Gewächshaus nach Anspruch 1 oder 2, **dadurch gekennzeichnet, daß** das Abmessungsverhältnis der Pfeilhöhe (F) eines Bogens zur Sehne (C) zwischen einer Stütze (21) und dem First (231) eines Binders (2) kleiner als 0,08 ist.

4. Gewächshaus nach einem der Ansprüche 1 bis 3, **dadurch gekennzeichnet, daß** der Flügel (4) eines jeden Binders (2) in der äußersten Öffnungsstellung um ein Maß (d) von wenigstens 40 cm gegenüber dem First (231) der Binder (2) hinausragt.

5. Gewächshaus nach einem der vorhergehenden Ansprüche, **dadurch gekennzeichnet, daß** der Krümmungsradius der Bögen (23) der Binder im wesentlichen konstant ist.

6. Gewächshaus nach einem der vorhergehenden Ansprüche, **dadurch gekennzeichnet, daß** die Abdeckwand (5) eine aufblasbare Doppelwand ist, die wenigstens zwei übereinander liegende und an den Dachrinnen (3) befestigte transparente dünne Folien umfaßt.

7. Gewächshaus nach Anspruch 6, **dadurch gekennzeichnet, daß** es Mittel zum veränderlichen Spannen (7) der beiden die aufblasbare Doppelwand bildenden dünnen Folien (51, 52) umfaßt.

8. Gewächshaus nach Anspruch 7, **dadurch gekennzeichnet, daß** die Mittel zum veränderlichen Spannen einen Satz ineinander passender Clips (7) umfassen, die ermöglichen, die beiden dünnen Folien (51, 52) der aufblasbaren Doppelwand an der Dachrinne (3) unabhängig festzulegen.

9. Gewächshaus nach einem der vorhergehenden Ansprüche, **dadurch gekennzeichnet, daß** die die Binder (2) verbindenden Dachrinnen (3) von einer profilierten Metallpfette (9), die an wenigstens einer ihrer Seiten ein Mittel zum Festlegen (8) einer transparenten dünnen Folie der Abdeckwand (5) umfaßt, gebildet sind.

10. Gewächshaus nach einem der vorhergehenden Ansprüche, **dadurch gekennzeichnet, daß** es flexible Dachrinnen (3') umfaßt, die an zwei profilierten Pfetten (9) befestigt sind, welche symmetrisch zu den Stützen (21) der Binder (2) im Bereich des oberen Endes der Stützen (21) fest angebracht sind, wobei die Pfetten Mittel (8) zum Festlegen der flexiblen Dachrinnen (3') umfassen, die geeignet sind, mit ergänzenden Festlegungsmitteln (7, 7') zusammenzuwirken.
